# EUROPÄISCHE PATENTSCHRIFT

(11) **EP 3 078 514 B1**
(45) Veröffentlichungstag und Bekanntmachung des Hinweises auf die Patenterteilung: **01.09.2021**
(21) Anmeldenummer: 16163543.8
(22) Anmeldetag: 01.04.2016
(51) Int. Cl.: B60D 1/26, B60D 1/54, B60D 1/62, B60D 1/06

(54) **SYSTEM MIT EINEM STEUERGERÄT UND EINEM BEDIENGERÄT**
SYSTEM WITH A CONTROL DEVICE AND AN OPERATING DEVICE
SYSTÈME COMPRENANT UN APPAREIL DE COMMANDE ET UN DISPOSITIF DE COMMANDE

(30) Priorität: 07.04.2015 DE 102015105253; 29.05.2015 DE 102015108526
(43) Veröffentlichungstag der Anmeldung: 12.10.2016
(73) Patentinhaber: WESTFALIA - Automotive GmbH, 33378 Rheda-Wiedenbrück (DE)
(72) Erfinder: BEUTIN, Jörg, 33332 Gütersloh (DE); KRANZ, Torsten, 59590 Geseke (DE); PASCHER, Nikolas, 33335 Gütersloh (DE)
(74) Vertreter: Patentanwälte Bregenzer und Reule Partnerschaftsgesellschaft mbB

(56) Entgegenhaltungen:
- WO-A1-94/18036
- DE-A1-102011 120 651
- US-A1- 2008 303 647
- None

## Beschreibung

Die Erfindung betrifft ein System umfassend ein Steuergerät für eine an einem Kraftfahrzeug angeordnete oder anordenbare Anhängekupplung, gemäß dem Oberbegriff des Anspruchs 1.

Ein derartiges System ist beispielsweise in DE 10 2011 120 651 A1 erläutert. Bei dem bekannten System ist das Steuergerät über ein mobiles, eine grafische Bedienoberfläche aufweisendes Bediengeräts, zum Beispiel ein Smartphone, bedienbar. Die Bedienung ist komfortabel. Allerdings ist das System aufwendig.

Es ist daher die Aufgabe der vorliegenden Erfindung, Verbesserungen für ein System der eingangs genannten Art bereitzustellen.

Zur Lösung der Aufgabe ist ein System gemäß der technischen Lehre des Anspruchs 1 vorgesehen.

Es ist dabei ein Grundgedanke, dass eine hohe Sicherheit erzielt ist, indem nämlich das Steuergerät und das Bediengerät verschlüsselt miteinander kommunizieren und somit eine exklusive Kommunikation zwischen Steuergerät und Bediengerät gesichert ist. Ein nicht zur Kommunikation mit dem Steuergerät berechtigtes, beispielsweise nicht autorisiertes und/oder authentifiziertes Bediengerät kann sich nicht in die Erde Kommunikation einschleusen. Somit kann beispielsweise ein Sicherheitsstandard gemäß ISO 26262 oder Automotive Safety Integrity Level (ASIL) der Stufen A oder B (ASIL-A oder ASIL-B) erreicht wird.

Das Verschlüsselungsverfahren hat vorzugsweise einen sich laufend verändernden Code. Beispielweise ist ein rollierender Code, ein wechselnder Code, ein so genannter Jumping Code oder Hopping Code vorteilhaft.

Bevorzugt ist ein rollierendes Verschlüsselungsverfahren.

Die Verschlüsselung kann beispielsweise eine PGP-Verschlüsselung sein (Pretty Good Privacy). Bevorzugt ist eine Verschlüsselung mit einer Vielzahl von Bits, zweckmäßigerweise mindestens 16 Bit, besonders bevorzugt 32 Bit oder 64 Bit.

Erfindungsgemäß sind bei dem Steuergerät und/oder Bediengerät mindestens ein Lesemittel vorhanden, mit welchem diese jeweils einen Schlüssel für die Verschlüsselungsmittel und die Entschlüsselungsmittel für die anschließende verschlüsselte Kommunikation einlesen können. Es ist selbstverständlich auch möglich, dass ein jeweiliger Schlüssel bei einem Steuergerät oder Bediengerät dauerhaft gespeichert ist, sodass er nicht jeweils individuell eingelesen werden muss. Es ist zum Beispiel möglich, dass das Bediengerät und das Steuergerät sozusagen ab Werk als fest kodiertes und miteinander kommunizierendes Paar ausgeliefert werden. Allerdings bietet das Einlesen eines Schlüssels individuell pro System den Vorteil, dass eine hohe, individuelle Sicherheit erzielbar ist.

Vorteilhaft ist vorgesehen, dass zwischen dem Bediengerät und dem Steuergerät ein so genannter geheimer Schlüssel vereinbart ist. Bevorzugt ist ein symmetrischer Schlüssel, den das Bediengerät und/oder das Steuergerät kennen.

Weiterhin ist ein kryptographischer Algorithmus zwischen Bediengerät und Steuergerät zweckmäßig, bei dem vom jeweiligen Sender, also Bediengeräts oder Steuergerät, ein sich stets ändernder nächster Code (Next-Code) an den Empfänger zur Prüfung übermittelt wird. Dieser Schritt ist eine sogenannte Verifizierung. Dieser nächste Code oder Next-Code wird vom Sender nicht wiederholt, um Angriffe von außen zu erschweren. Der nächste Code oder Next-Code kann ein Element einer vordefinierten und geeignet langen Liste bilden, die zyklisch durchgespielt oder durchiteriert wird. Auf diesem Wege ist ein sogenannter rollierender Code möglich.

Zweckmäßig ist es also, wenn ein so genannter Einwegschlüssel verwendet wird, der für jede erneute Benutzung gewechselt wird, d.h. dass ein neuer Code erzeugt wird. Der Einwegschlüssel kann beispielsweise aus einem Initialisierungsvektor mit einer vorbestimmten Länge, beispielsweise 32 Bit, und einem Wechselcode bestehen.

Vorteilhaft ist, wenn ein Schlüssel für die Verschlüsselungsmittel des Bediengeräts am oder im Steuergerät gespeichert ist. Somit muss also nur das Bediengerät angelernt werden, das Steuergerät jedoch nicht. Bevorzugt ist dabei, dass der Schlüssel für das Steuergerät selbst nicht eingelesen werden muss, also beispielsweise am oder im Steuergerät gespeichert ist.

Eine Variante der Erfindung sieht vor, dass das mindestens eine Lesemittel eine optische Schnittstelle zum Einlesen des Schlüssels anhand eines optischen Codes, beispielsweise eines Barcode, eines QR-Codes oder dergleichen, aufweist. Der optische Code, insbesondere ein QR-Code, ist beispielsweise in einer Bedienungsanleitung zu dem System abgebildet. Der Code wird zweckmäßigerweise individuell pro System erzeugt. Beispielsweise kann das mindestens eine Lesemittel eine Kamera, einen Scanner, insbesondere einen Barcode-Scanner oder dergleichen umfassen.

Die andere Variante Erfindung sieht vor, dass das mindestens eine Lesemittel eine Drahtlos-Schnittstelle, nämlich eine Funkschnittstelle, zum drahtlosen

Einlesen des Schlüssels aufweist. Beispielsweise ist der Schlüssel auf einem RFID-Tag (RFID = radio frequency identification) gespeichert. Der RFID-Tag kann beispielsweise an dem Bediengerät angeordnet sein. Es ist auch möglich, dieses RFID-Bauteil mit dem Schlüssel beispielsweise in eine Bedienungsanleitung für das erfindungsgemäße System einzubinden, beispielsweise in diese einzukleben.

Eine vorteilhafte Maßnahme sieht vor, dass das mindestens eine Lesemittel zum Einlesen des Schlüssels über eine kurze Distanz von maximal 30 cm, bevorzugt nur 20 cm oder 10 cm, zu dem Speicher, in welchem der Schlüssel gespeichert ist, also beispielsweise dem Barcode oder dem Funksender, ausgestaltet ist. Somit kann der Schlüssel unbefugt gar nicht erst eingelesen werden. Noch höhere Sicherheit erzielt man, wenn das mindestens eine Lesemittel nur im Abstand von ca. 3-8 cm den Schlüssel einlesen kann. Es ist aber auch möglich, dass das mindestens eine Lesemittel zum Einlesen des Schlüssels über eine größere Distanz von Beispielweise maximal 2 m, vorzugweise maximal 1,5 m ausgestaltet ist. Somit kann ein eventuell relativ schlecht zugängliches Medium, in welchem der Schlüssel gespeichert ist, zum Beispiel das Steuergerät, dennoch ausgelesen werden.

Eine weitere sichere Maßnahme stellt es dar, wenn das Steuergerät den Schlüssel zur Kommunikation zwischen Bediengerät und Steuergerät aufweist, also z.B. einen Speicher, insbesondere einen elektronischen Speicher, für den Schlüssel aufweist. Der Schlüssel ist von dem Bediengerät ausschließlich drahtgebunden, beispielsweise über elektrische Kontakte, vorzugweise auslesbar. Es ist aber auch möglich, dass der Schlüssel von dem Bediengerät nur dann auslesbar ist, wenn ein direkter Kontakt zwischen Steuergerät und Bediengerät hergestellt ist. Beispielsweise kann es vorgesehen sein, dass das Bediengerät in eine Steckaufnahme des Steuergeräts eingesteckt wird, damit das Bediengerät den Schlüssel auslesen kann. Weiterhin ist es möglich, dass der Schlüssel vom Bediengerät nur dann ausgelesen werden kann, wenn zugleich ein Bedienschalter oder Sensor an Bord des Steuergeräts betätigt ist. Der Schalter kann beispielsweise von einem Bediener manuell, z.B. durch Drücken, betätigt werden.

Es ist beispielsweise möglich, dass der Schalter an Bord einer Steuerplatine des Steuergeräts ist und nur durch eine Durchtrittsöffnung an einem Gehäuse des Steuergeräts hindurch betätigbar ist. Durch die Durchtrittsöffnung passt ein Bedienwerkzeug, zum Beispiel ein Stift, Kugelschreiber oder dergleichen, wenn also der Bediener gleichzeitig den Schalter oder Taster an Bord des Steuergeräts drückt oder betätigt und das mindestens eine Lesemittel des Bediengeräts aktiviert, kann dieses mindestens eine Lesemittel den Schlüssel vom Steuergerät auslesen. Beispielsweise wird ein Sender an Bord des Steuergeräts zum Senden des Schlüssels an das Bediengerät aktiviert. Beispielsweise hat das Steuergerät einen Sender, der durch einen Drucktaster, optischen Sensor oder dergleichen, durch den Bediener aktivierbar ist, sodass er den Schlüssel an das Bediengerät sendet.

Es ist aber auch alternativ denkbar und möglich, dass ein Speicher für einen Schlüssel zur Kommunikation ausschließlich drahtgebunden bei direktem Kontakt zwischen Bediengerät und Steuergerät oder bei Betätigung eines Sensors oder Schalters an Bord des Bediengeräts auslesbar ist und/oder das Bediengerät einen Sender zum Senden des Schlüssels an das Steuergerät aufweist, der durch einen Bediener manuell oder in sonstiger Weise betätigbar ist. Bei dieser Variante ist also der Schlüssel sozusagen an Bord des Bediengeräts gespeichert und kann bei einer Paarung mit dem Steuergerät vom Steuergerät adaptiert werden, um anschließend eine sichere, verschlüsselte Kommunikation mit dem Bediengerät durchzuführen.

Es ist weiterhin möglich, dass die Quelle oder der Speicher, in welchem der Schlüssel gespeichert ist, gegenüber unbefugtem Auslesen abgeschirmt ist. Beispielsweise ist das Bediengerät hinter einem Karosserieblech gegenüber der Umgebung des Kraftfahrzeugs verborgen oder geschützt, durch welches hindurch der Speicher, beispielsweise ein Funksender mit dem Schlüssel für die Verschlüsselung, nicht auslesbar ist. Es ist weiterhin möglich, dass auch an Bord des Steuergeräts eine Abschirmung vorgesehen ist. Beispielsweise kann ein Gehäuse des Steuergeräts abschnittsweise als Abschirmung ausgestaltet sein, sodass ein RFID-Tag nur von einer bestimmten Position aus ausgelesen werden kann, beispielsweise vom Fahrzeug-Innenraum des Kraftfahrzeugs, an welchem oder in welchem das Steuergerät angeordnet ist. Die Abschirmung kann beispielsweise nur zum Innenraum des Kraftfahrzeugs hin offen sein, zu Umgebung des Kraftfahrzeugs hin jedoch geschlossen, sodass der Schlüssel nicht vom Außenbereich, also der Umgebung, des Kraftfahrzeugs ausgelesen werden kann. Beispielsweise sind an dem Steuergerät Maßnahmen getroffen, dass dieses nur in einer solchen Einbaulage im oder am Kraftfahrzeug montierbar ist, dass die Abschirmung gegenüber der Umgebung wirksam ist. Wenn also beispielsweise eine neben dem Kraftfahrzeug stehende Person versucht, den Schlüssel auszulesen, kann dies nicht gelingen. Beispielsweise hat das Steuergerät ein Abschirmungsblech, eine abschirmende Wand oder dergleichen, die zwischen dem Speicher für den Schlüssel und der Umgebung des Kraftfahrzeugs angeordnet ist, wenn das Steuergerät in einer vorgesehenen Einbaulage am Kraftfahrzeug montiert ist. Die abschirmende Wand, das Abschirmungsblech oder dergleichen, hat beispielsweise eine trichterförmige oder U-förmige Gestalt und ist zum Innenraum des Kraftfahrzeugs hin offen.

Weiterhin ist es zweckmäßig, wenn die Verschlüsselung sozusagen auf der Kommunikationsebene direkt zwischen den drahtlos kommunizierenden Schnittstellen des Steuergeräts und des Bediengeräts vorgesehen ist. Die drahtlose Kommunikation, sozusagen die Funkstrecke oder eine optische Kommunikationsstrecke (Infrarot oder dergleichen), ist also bereits verschlüsselt. Eine Verschlüsselung auf höherer Ebene, beispielsweise eine Verschlüsselung von Daten, bevor diese an einen Funktreiber oder optischen Treiber übergeben werden (zum Beispiel einen Bluetooth-Treiber), ist somit nicht unbedingt notwendig.

Es ist aber auch möglich, dass die Verschlüsselung sozusagen auf einer höheren Ebene funktioniert, d.h. dass die drahtlose Strecke zwischen den drahtlosen Schnittstellen des Bediengeräts und des Steuergeräts nicht verschlüsselt ist, beispielsweise eine einfache Bluetooth-Strecke ist. Dann ist die Verschlüsselung auf höherer Ebene, beispielsweise zwischen einem Anwendungsprogramm oder Applikationsprogramm des Bediengeräts und einem entsprechend passenden Programm des Steuergeräts vorgesehen. In diesem Fall können beispielsweise auch solche drahtlose Kommunikationen zwischen Bediengerät und Steuergerät vorgesehen sein, die nicht verschlüsselt war sind, zum Beispiel Bluetooth. Somit ist der erfindungsgemäße Ansatz zum Beispiel auch bei Systemen realisierbar, bei denen das Bediengerät beispielsweise von einem Smartphone, einem Notebook oder dergleichen bereitgestellt ist.

Zur Lösung der Aufgabe wird im Rahmen einer an sich eigenständigen Erfindung, also im Zusammenhang mit einem System gemäß Oberbegriff des Anspruchs 1, weiterhin vorgeschlagen, dass das Steuergerät eine Bedienschnittstelle zur lokalen Bedienung aufweist, wobei die Bedienschnittstelle nur anhand eines Bedienwerkzeugs, beispielsweise anhand eines Stifts, bedienbar ist und/oder durch eine Abdeckung abgedeckt ist, die zwischen einer Offenstellung, in der die Bedienschnittstelle für einen Bediener zugänglich ist, und einer Schließstellung, in welcher die Abdeckung die Bedienschnittstelle für einen Bediener unzugänglich verschließt, verstellbar ist.

Die sozusagen normale oder übliche Bedienung erfolgt also über das Bediengerät, beispielsweise dessen Tasten. Das Steuergerät selbst stellt sozusagen nur noch eine Notbedienung bereit. Somit kann das Steuergerät noch immer bedient werden, auch wenn das Bediengerät ausfällt oder verloren gegangen ist. Die Bedienung lokal am Steuergerät ist allerdings gemäß einem vorteilhaften Aspekt ganz bewusst erschwert, um Fehlbedienungen zu vermeiden. Ein anderer vorteilhafter Aspekt ist es, dass lokal am Steuergerät nahezu keine Bedienfunktion mehr notwendig ist, weil nämlich das Bediengerät diese bereitstellt. Allerdings ist die Bedienschnittstelle des Steuergeräts sozusagen spartanisch ausgestaltet und beschränkt sich sozusagen auf die Notfunktion. Eine aufwändige Konstruktion am Steuergerät selbst, beispielsweise mehrere Taster, akustische Signalisierungsmittel oder optische Anzeigemittel oder dergleichen, sind nicht notwendig. Diese die Bediensicherheit erhöhende und/oder den Komfort verbessernde Funktionalität wird vom Bediengerät bereitgestellt. Das Steuergerät selbst kann einfach gehalten sein. Der Aufwand zur Verlegung von beispielsweise Tastschaltern oder dergleichen im Kraftfahrzeug wird verringert oder entfällt ganz.

Man braucht auch weniger Platz, die beispielsweise zur Montage von Tastschaltern in einem Innenraum des Kraftfahrzeugs sonst notwendig wären.

Eine zweckmäßige Variante der Erfindung sieht vor, dass die lokale Bedienschnittstelle des Steuergeräts einen auf einer Steuerplatine angeordneten elektrischen Schalter oder Sensor umfasst. Somit kann beispielsweise ein Tastschalter, ein Näherungssensor oder dergleichen, unmittelbar an einer Steuerplatine, welche beispielsweise einen Elektromotor eine Verriegelung und/oder eines Schwenkantriebs der Anhängekupplung ansteuert, angeordnet sein. Der Aufbau des Steuergeräts ist dadurch besonders einfach. An dieser Stelle sei aber erwähnt, dass grundsätzlich auch an einer anderen Stelle als an der Steuerungsplatine ein Sensor, Schalter oder sonstiges Bedienelement zur lokalen Bedienung des Steuerungsgeräts vorgesehen sein kann.

Eine bevorzugte Ausführungsform kann vorsehen, dass die lokale Bedienschnittstelle des Steuergeräts keine optischen und/oder keine akustischen Ausgabemittel oder Anzeigemittel umfasst. Somit ist es zum Beispiel möglich, dass das Steuergerät keine LEDs, keinen Monitor oder dergleichen andere optische Ausgabemittel an Bord hat. Diese Funktion wird ausschließlich durch das sozusagen entfernte, drahtlos kommunizierende mobile Bediengerät realisiert.

Eine Variante der Erfindung sieht vor, dass die lokale Bedienschnittstelle des Steuergeräts nur anhand eines Bedienwerkzeugs, beispielsweise eine Stifts, insbesondere eines Kugelschreibers oder dergleichen, bedienbar ist. Die lokale Bedienschnittstelle ist sozusagen so klein oder so unzugänglich ausgestaltet, dass sie ohne das Bedienwerkzeug nicht bedienbar ist. Dadurch wird eine Fehlbedienung vermieden. Beispielsweise ist an einem Gehäuse des Steuergeräts oder einer Schutz-Ummantelung des Steuergeräts eine Durchtrittsöffnung für das Bedienwerkzeug vorgesehen, durch die hindurch das Bedienwerkzeug den Sensor oder Schalter des Steuergeräts für die lokale Bedienschnittstelle betätigen kann. Somit kann beispielsweise ein Kugelschreiber oder sonstiges stiftartiges Werkzeug durch die Durchtrittsöffnung hindurch auf den Schalter oder Sensor einwirken. Dieser Sensor oder Schalter ist vorzugsweise, wie erwähnt, an einer Steuerplatine des Steuergeräts oder auf einer Steuerplatine des Steuergeräts angeordnet.

Ganz allgemein gesagt ist es zwar zweckmäßig, dass das Steuergerät eine lokale Bedienschnittstelle aufweist, diese jedoch funktional sehr eingeschränkt ist. Die lokale Schnittstelle ist zweckmäßigerweise auf eine Notfunktion eingeschränkt.

Eine vorteilhafte Funktion ist es, wenn die lokale Bedienschnittstelle des Steuergeräts zum Senden eines Schlüssels für eine verschlüsselte Kommunikation zwischen dem Steuergerät und dem Bediengerät ausgestaltet ist. Anhand des beispielsweise auf der Steuerplatine angeordneten Schalters kann ein Sender des Steuergeräts zum Senden des Schlüssels an das Bediengerät ausgestaltet sein. Vorteilhaft ist dabei, wenn dies nicht ohne gewisse Umstände geschieht, d.h. dass beispielsweise der Schalter wie erläutert nur durch die Durchtrittsöffnung des Gehäuses hindurch betätigbar ist, beispielweise anhand eines Kugelschreibers oder dergleichen. Dadurch wird verhindert, dass das Steuergerät den Schlüssel an ein sozusagen unautorisiertes oder fremdes Bediengerät sendet, das an sich nicht zu Betätigung der Anhängekupplung vorgesehen ist. Der Bediener muss also aktiv die Paarung von Steuergerät und Bediengerät betreiben, indem er zum Beispiel gleichzeitig das Steuergerät zum des Schlüssels an das Bediengerät betätigt und das Bediengerät zum Empfangen des Schlüssels aktiviert. Dabei ist es möglich, dass diese Bedienhandlungen sequenziell erfolgen, das heißt dass durch eine jeweilige Bedienung von Bediengerät und Steuergerät ein Zeitfenster geöffnet wird, in welchem das Steuergerät den Schlüssel sendet, gegebenenfalls wiederholt sendet, und in welchem Zeitfenster das Bediengerät zum Empfangen des Schlüssels bereit ist.

Eine andere Variante der Erfindung, auch in Ergänzung mit der obigen Variante, sieht vor, dass die lokale Bedienschnittstelle des Steuergeräts hinter einer Abdeckung verdeckt ist, die zwischen einer Offenstellung und einer Schließstellung verstellbar ist. In der Offenstellung kann der Bediener zwar an die lokale Bedienschnittstelle heran kommen, in der Schließstellung jedoch nicht. Die Abdeckung kann beispielsweise ein Deckel eines Gehäuses des Steuergeräts sein. Es liegt aber auch im Rahmen der Erfindung, dass das System ein Abdeckteil als die vorgenannte Abdeckung oder als Bestandteil der vorgenannten Abdeckung aufweist, das einen Bestandteil einer Innenraumabdeckung oder Innenraumverkleidung des Kraftfahrzeugs bildet. Das Abdeckteil muss also vom Bediener sozusagen gezielt entfernt oder geöffnet werden, d.h. die Innenraumverkleidung des Kraftfahrzeugs geöffnet werden, dass die Bedienschnittstelle des Steuergeräts zugänglich wird. An dieser Stelle sei bemerkt, dass auch eine Kombination aus Innenraumverkleidungsabdeckteil und Gehäusedeckel eines Gehäuses des Steuergeräts vorgesehen sein kann, d.h. dass der Bediener zunächst die Innenraumverkleidung öffnen und anschließend das Gehäuse des Steuergeräts öffnen muss, um eine die lokale Bedienschnittstelle zur lokalen Bedienung des Steuergeräts zu gelangen.

Die Kombination aus Abdeckung und Bedienkonzept nur mit Bedienwerkzeug sieht beispielsweise vor, dass ein Bediener zunächst die Abdeckung der Innenraumverkleidung entfernen muss, um anschließend an das Steuergerät zu gelangen. Auch dann ist die Bedienung nicht einfach, d.h. an dem Bediengerät sind keine bequem manuell zugänglichen Bedienelemente vorgesehen, sondern der Bediener muss mit einem separaten Bedienwerkzeug das Steuergerät für die Notbedienung aktivieren. Im Prinzip kennt man eine derartige Vorgehensweise bei Antrieben für Schiebedächer von Kraftfahrzeugen. Auch bei diesen ist in der Regel keine Notbedienung notwendig. Auch bei der erfindungsgemäßen Anhängekupplung ist eine Notbedienung vorteilhaft ganz bewusst erschwert, um Fehlbedienungen zu vermeiden. Insbesondere können bei dem Bediengerät - wie später noch deutlich wird - weitere oder hochwertigere Sicherheitsfunktionen realisiert sein, die bei einer lokalen Bedienung am Steuergerät direkt nicht ohne weiteres realisierbar sind, beispielsweise weil dort weniger Bedienelemente und/oder Signalisierungsmittel für Funktionalitäten bereitstehen.

Zur Lösung der eingangs genannten Aufgabe ist im Rahmen einer an sich eigenständigen Erfindung, also bei einem System gemäß Oberbegriff des Anspruchs1, ferner vorgesehen, dass an dem Bediengerät optische Ausgabemittel zur Anzeige einer Funktion der Steuermittel, insbesondere einer Verriegelung oder Entriegelung des Kupplungsarms und/oder einer Verstellung des Kupplungsarms zwischen einer Nichtgebrauchsstellung und einer Gebrauchsstellung, vorgesehen sind. Die optischen Ausgabemittel können auch dafür vorgesehen sein, dass mindestens eine Sensorsignal auszugeben. So können über die optischen Ausgabemittel beispielsweise Stützlastwerte ausgegeben werden. Es ist auch möglich, dass die Ausgabemittel nur anzeigen, ob eine Stützlast zulässig oder zu groß ist, beispielsweise einen Grenzwert überschreitet. So kann beispielsweise eine grüne Leuchtdiode dafür stehen, dass die Stützlast in Ordnung ist, eine rote Leuchtdiode oder ein rotes optisches Signal eine Überschreitung des zulässigen Stützlastwertes signalisieren. Besonders bevorzugt ist, wenn nur an dem Bediengerät die entsprechenden optischen Ausgabemittel vorgesehen sind, nicht jedoch an dem Steuergerät. Soweit also optische Ausgabemittel bei einem erfindungsgemäßen System vorhanden sind, sind sie am Bediengerät, nicht am Steuergerät von außen her erkennbar. Am Steuergerät sind die optischen Ausgabemittel möglicherweise gar nicht zugänglich oder sichtbar, beispielsweise weil sie hinter einer Innenraumverkleidung des Kraftfahrzeugs verborgen sind.

Dies soll allerdings nicht heißen, dass am Steuergerät beispielsweise für eine Wartungsfunktion oder dergleichen zusätzlich noch optische Ausgabemittel vorgesehen sein können. So ist es denkbar, dass an einer Steuerungsplatine, die in einem Gehäuse des Steuergeräts angeordnet ist, LEDs oder dergleichen angeordnet sind, die eine Funktion des Steuergeräts optisch anzeigen. Allerdings sind diese LEDs oder sonstigen optischen Anzeigemittel des Steuergeräts vorzugweise nur dann sichtbar, wenn eine Innenraumverkleidung des Kraftfahrzeugs entfernt ist und/oder der Bediener durch eine Öffnung des Gehäuses des Steuergeräts schaut. Bevorzugt ist jedenfalls vorgesehen, dass am Steuergerät vorhandene optische Ausgabemittel im am Fahrzeug montierten Zustand des Steuergeräts nicht sichtbar sind.

Die optischen Ausgabemittel des Bediengeräts umfassen zweckmäßigerweise mindestens eine LED. Die optischen Ausgabemittel signalisieren beispielsweise anhand eines Farbwechsels, beispielsweise von Grün auf Rot, dass die Anhängekupplung entriegelt ist. Es ist also vorteilhaft, wenn einem bestimmten Status der Anhängekupplung ein vorbestimmtes optisches Signal der optischen Ausgabemittel des Bediengeräts zugeordnet ist. Wenn also die Anhängekupplung in einem fahrbereiten Zustand ist, d.h. in Gebrauchsstellung und verriegelt, leuchtet eine optische Anzeige am Bediengerät grün, ansonsten rot. Es ist auch möglich, dass durch ein optisches Signal grün und rot signalisiert wird, dass die Anhängekupplung zwar nicht in der Gebrauchsstellung, sondern in der Nichtgebrauchstellung ist, jedoch in der Nichtgebrauchstellung verriegelt ist. Auch einfache optische Signalfolgen, beispielsweise ein Blinken einer Zustands-LED, können eine Funktion der Anhängekupplung signalisieren. Wenn also beispielsweise der Kupplungsarm von der Gebrauchsstellung in die Nichtgebrauchsstellung oder umgekehrt verstellt wird, blinken die entsprechenden optischen Anzeigen des Bediengeräts, zum Beispiel eine LED.

Weiterhin ist es vorteilhaft, wenn die optischen Ausgabemitteln des Bediengeräts eine Rückmeldung geben, wenn ein Bedienelement der Bedienschnittstelle des Bediengeräts betätigt ist. Wenn also der Bediener auf einen Tastschalter oder dergleichen des Bediengeräts drückt, signalisiert beispielsweise eine LED oder ein sonstiges Anzeigemittel die jeweilige Betätigung.

Zusammenfassend ist also ein bidirektionale Kommunikationskonzept vorteilhaft, bei dem das Bediengerät das Steuergerät drahtlos ansteuert und das Steuergerät wiederum dem Bediengerät den jeweiligen Status der Anhängekupplung zurück meldet, beispielsweise Kupplungsarm verriegelt oder entriegelt und/oder Kupplungsarm in der Gebrauchsstellung, der Nichtgebrauchsstellung oder einer Zwischenstellung zwischen Gebrauchsstellung und Nichtgebrauchstellung.

Es ist möglich, dass das Steuergerät akustische Ausgabemittel, beispielsweise einen Lautsprecher, aufweist, um eine Funktion, die das Bediengerät auslöst oder ansteuert zu signalisieren. Dabei ist es insbesondere möglich, dass das Steuergerät ausschließlich akustische Ausgabemittel hat, d.h. keine optischen Ausgabemittel. Es ist aber auch möglich, dass die Ausgabemittel des Steuergeräts akustische und optische Ausgabemittel umfassen, wobei die optischen Ausgabemittel in der Regel nicht sichtbar sind, beispielsweise hinter einer Innenraumverkleidung des Kraftfahrzeugs verdeckt. Die akustischen Ausgabemittel haben den Vorteil, dass sie auch dann wahrnehmbar sind, wenn das Steuergerät beispielsweise unterhalb des Kraftfahrzeugs montiert ist oder hinter einer Verkleidung des Kraftfahrzeugs versteckt ist. Der Bediener hört die Funktion, die er über das mobile Bediengerät auslöst oder ansteuert. So kann beispielsweise ein Auslösevorgang für eine Entriegelung der Anhängekupplung, eine Verriegelung der Anhängekupplung, eine Bewegung zwischen Arbeitsstellung und Ruhestellung oder dergleichen durch ein akustisches Signal, insbesondere eine Signalfolge, ausgegeben werden. Der Bediener erhält also eine akustische Rückkopplung über seine Bedienhandlung oder die von ihm ausgelöste Funktion von Steuergerät und/oder Anhängekupplung. Ein Lautsprecher oder sonstiges akustisch funktionierendes Signalisierungsmittel des Steuergeräts kann beispielsweise direkt auf oder an einer Steuerplatine des Steuergeräts angeordnet sein.

Eine akustische Schnittstelle bzw. akustische Ausgabemittel sind Beispielweise ohnehin bei einem Mobiltelefon, das als Bediengeräts geeignet wäre, vorhanden. Die akustische Schnittstelle wird z.B. von einer entsprechenden erfindungsgemäßen Software angesteuert.

Zweckmäßigerweise ist vorgesehen, dass das Steuergerät nur für eine Montage in einem Innenraum des Kraftfahrzeugs ausgestaltet ist. Ein Schutzgehäuse, das also Umwelteinflüsse, Salz, Wasser oder dergleichen, aushalten würde, ist bei dem Steuergerät dann nicht vorhanden. Beispielweise ist das Gehäuse des Steuergeräts nur ein Kunststoffgehäuse, das nicht abgeschirmte oder gegen Wasser abgedichtete Öffnungen aufweist. Dadurch ist der Aufbau des Steuergeräts sehr einfach. Der Schutz vor Umwelteinflüssen wird sozusagen durch das Kraftfahrzeug bereitgestellt. In diesem Zusammenhang ist jedoch das Bedienkonzept des Steuergeräts anhand des drahtlos kommunizierenden Bediengeräts besonders vorteilhaft. Da die Bedienkomponenten zur Bedienung des Steuergeräts und somit der Anhängekupplung, zum Beispiel Tastschalter oder dergleichen, nicht am oder im Innenraum des Kraftfahrzeugs angeordnet oder montiert werden müssen. Diese Funktionalität wird vom Bediengerät bereitgestellt.

Es sei aber der Vollständigkeit halber erwähnt, dass ein Bediengerät mit den erfindungsgemäßen Fernsteuerfunktionen oder Anzeigefunktionen auch ein Steuergerät ansteuern kann oder von einem Steuergerät angesteuert werden kann, zum Beispiel zur Anzeige von Sensorwerten, dass im Außenbereich des Kraftfahrzeugs angeordnet ist. Das Steuergerät hat in diesem Fall zweckmäßigerweise ein Schutzgehäuse zur Abschirmung gegen Umwelteinflüsse.

Zur Bedienung und/oder zur Anzeige können beim Bediengerät folgende Maßnahmen vorteilhaft vorgesehen sein.

Das Bediengerät weist vorteilhaft eine lokale Bedienschnittstelle auf. Die Bedienschnittstelle kann beispielsweise ganz einfache Tastschalter umfassen. So ist es möglich, dass ein Tastschalter gedrückt werden muss, um eine Verriegelung der Anhängekupplung zu lösen und/oder ein Verstellen des Kupplungsarms zwischen einer Gebrauchsstellung und einer Nichtgebrauchsstellung auszulösen. Es kann im Prinzip ein einziger Druckschalter oder Sensor oder sonstiges Bedienelement an der Bedienschnittstelle vorgesehen sein.

Bevorzugt ist jedoch vorgesehen, dass ein Sicherheitskonzept oder Sicherheitsbedienkonzept realisiert ist. Beispielsweise umfasst die Bedienschnittstelle des Bediengeräts einen Taster oder Sensor, bevorzugt zwei Taster oder Sensoren, der oder die in einer bestimmten Reihenfolge und/oder gleichzeitig bedient werden müssen, um eine Funktion der Steuermittel auszulösen, beispielsweise die Verriegelung der Anhängekupplung zu lösen und/oder deren Verstellung zwischen Gebrauchsstellung und Nichtgebrauchstellung auszulösen.

Dies hat insbesondere dann große Vorteile, wenn das Bediengerät versehentlich betätigt werden könnte. Das Bediengerät ist nämlich wie später noch erläutert wird in einer bevorzugten Ausführungsform besonders kompakt, kann also beispielsweise in einer Tasche einer Hose, einer Jacke oder dergleichen ohne weiteres mitgeführt werden. Gerade dann ist eine Fehlbedienung nicht unwahrscheinlich, da nämlich der Bediener unabsichtlich auf ein Bedienelement einwirken kann. Wenn dann eine ganz gezielte Bedienung erforderlich, d.h. dass der Bediener beispielsweise zwei Bedienelemente gleichzeitig oder in einer bestimmten Reihenfolge drückt oder ein Bedienelement in einer bestimmten Bedienreihenfolge betätigt, beispielsweise in kurzen Abständen dreimal drücken muss, damit die Stellmittel des Steuergeräts aktiv werden, ist eine notwendige Sicherheit bzw. ein Schutz gegen Fehlbedienung vorteilhaft realisierbar.

Ein bevorzugtes Bedienkonzept sieht vor, dass ein Taster oder Sensor des Bediengeräts betätigt wird, worauf sich ein Zeitfenster geöffnet, innerhalb dessen der Taster oder Sensor ein weiteres Mal betätigt werden muss. Beispielsweise beträgt das Zeitfenster zwischen 2 und 6 Sekunden, bevorzugt 4 Sekunden. Erfolgt innerhalb dieser 4 Sekunden oder jedenfalls innerhalb des Zeitfensters ein weiterer Tastendruck oder eine entsprechende weitere Bedienhandlung, wird die Verriegelung ausgelöst und/oder ein Verstellvorgang des Kupplungsarms eingeleitet. Zweckmäßigerweise ist in diesem Fall auch eine Sperrfunktion, d.h. dass innerhalb des Zeitfensters nur ein einziger Bedienvorgang erfolgen darf. Wenn also beispielsweise innerhalb des Zeitfensters ein Taster mehrfach betätigt wird, zum Beispiel zweimal, löst dies keine Entriegelung oder Verstellung der Anhängekupplung aus.

Bevorzugt ist es, wenn ein Tastendruck oder ein Bedienbefehl, der eine bestimmte Betätigungsdauer überschreitet, zu einer Blockierung führt. Wenn also beispielsweise ein Taster dauerhaft gedrückt wird, führt dies nicht zu einer Entriegelung und/oder Verstellung der Anhängekupplung.

Die vorgenannten Konzepte der Bediensicherheit können beim Bediengerät oder auch beim Steuergerät oder beiden realisiert werden. Beispielsweise kann schon das Bediengerät das Senden eines Steuersignals blockieren, wenn die vorgegebene Bedienreihenfolge nicht eingehalten wird. Es ist aber auch möglich, dass das Steuergerät nur Steuersignale auswertet, die im Rahmen des vorgegebenen Sicherheitsbedienkonzepts liegen.

Nachfolgend einige bevorzugte Ausgestaltungen der drahtlosen Kommunikation zwischen den beiden Schnittstellen des Steuergeräts und des Bediengeräts:
Die drahtlose Kommunikation kann eine optische Kommunikation sein, beispielsweise auf Basis von Infrarot-Signalen. Besonders bevorzugt ist eine Funk-Kommunikation. Eine Kommunikation im höheren Frequenzbereich, beispielsweise mindestens 1 GHz, besonders bevorzugt mindestens 2 GHz, insbesondere 2,4 GHz, ist vorteilhaft. Selbstverständlich kann die Kommunikation auch bei niedrigeren Frequenzen ohne weiteres realisiert werden, beispielsweise im Bereich der für Schließsysteme bei Kraftfahrzeugen üblichen Frequenzen von 315-433 MHz.

Eine höhere Frequenz kann eine Kommunikation zwischen Steuergerät und Bediengerät mit höherer Datenqualität oder die Übertragung wichtiger Informationen in entsprechend kürzerer Zeit ermöglichen.

Es ist eine vorteilhafte Maßnahme, wenn die drahtlose Kommunikation bidirektional zwischen Bediengerät und Steuergerät erfolgt. Prinzipiell möglich ist aber auch bei jeder der vorgenannten Maßnahmen, dass die Kommunikation zumindest in Hinsicht auf eine Datenübertragung unidirektional ist, d.h. beispielsweise zur Übertragung von Sensordaten nur die Kommunikation vom Steuergerät zum Bediengerät erfolgt oder beispielsweise zur Steuerung der Anhängekupplung die Kommunikation nur vom Bediengerät zum Steuergerät erfolgt. Es versteht sich, dass für sogenannte Handshakes oder sonstige Kommunikation auf unteren Kommunikationsebenen, zum Beispiel gemäß dem ISO-Schichtenmodell auf den Schichten 1-4 eine bidirektionale Kommunikation vorgesehen ist, während die oberen Schichten (Sitzungsschicht, Darstellungsschicht und Anwendungsschicht / Schichten 4-7) nur eine unidirektionale Kommunikation zwischen Steuergerät und Bediengerät oder umgekehrt vorgesehen ist. Diese Ausführungen gelten für die verschlüsselte und für die unverschlüsselte Kommunikation zwischen Steuergerät und Bediengerät.

Insbesondere im Zusammenhang mit einer relativ hochfrequenten Kommunikation, aber auch anderweitig, kann ohne weiteres die nachfolgende Maßnahme realisiert werden.

Besonders bevorzugt ist nämlich die Kommunikation zwischen den drahtlosen Schnittstellen, der Steuergerät, Schnittstelle und der Bediengerät-Schnittstelle auf einen Bereich von ca. maximal 15 m, insbesondere maximal ca. 10 m, besonders bevorzugt auf ca. 5 m begrenzt. Dadurch ist gewährleistet, dass nur ein Bediengerät, das sich in der Nähe des Steuergeräts befindet, mit dem Steuergerät kommuniziert. Nur dann, wenn sich der Bediener in der Nähe der Anhängekupplung befindet, kann er mittels des Bediengeräts das Steuergerät ansteuern oder vom Steuergerät Daten erhalten.

Die Steuermittel sind zweckmäßigerweise zur Steuerung mindestens eines Antriebs ausgestaltet. Mit dem Antrieb kann beispielsweise eine Verriegelung des Kupplungsarms gelöst oder hergestellt oder beides werden. Ferner ist es vorteilhaft, dass ein Antrieb zur Verstellung des Kupplungsarms zwischen einer Gebrauchsstellung und einer Nichtgebrauchsstellung durch die Steuermittel des Steuergeräts ansteuerbar ist. Die Antriebe für Verriegelung und Verstellung des Kupplungsarms können separate Motoren umfassen, insbesondere Elektromotoren. Es ist aber auch möglich, dass ein und derselbe Elektromotor oder Antrieb eine Verriegelung und eine Verstellung des Kupplungsarms zwischen Gebrauchsstellung und Nichtgebrauchstellung realisiert. In der Gebrauchsstellung steht der Kupplungsarm nach hinten vor ein Heck des Zugfahrzeugs oder Kraftfahrzeugs vor, sodass ein Anhänger oder Lastenträger angekuppelt werden kann. In der Nichtgebrauchsstellung ist der Kupplungsarm näher zum Heck des Zugfahrzeugs oder Kraftfahrzeugs hin verstellt, beispielsweise hinter einer Heckschürze oder einem Stoßfänger verborgen, sodass er weniger stört. Jedenfalls ist die Nichtgebrauchsstellung nicht dafür vorgesehen, einen Lastenträger oder Anhänger anzukuppeln. Beispielweise ist der Kupplungsarm zwischen der Nichtgebrauchsstellung und der Gebrauchsstellung schwenkbeweglich und/oder verschieblich an einem fahrzeugseitigen Halter der Anhängekupplung gelagert.

Die Steuermittel weisen zweckmäßigerweise eine Leistungselektronik, Relais oder dergleichen andere Mittel zur Ansteuerung eines Antriebs, zum Beispiel eines Stellantriebs für den Kupplungsarm oder Ent-/Verriegelungsantriebs einer Verriegelungseinrichtung der Anhängekupplung auf.

Mit dem Bediengerät kann ein Antrieb, der dann den Kupplungsarm zwischen diesen beiden Stellungen verstellt, angesteuert werden. Der Bediener kann bequem hinter dem Kraftfahrzeug stehen und die Anhängekupplung zur Verstellung zwischen Gebrauchsstellung und Nichtgebrauchstellung ansteuern. Ein einfaches Konzept sieht vor, dass die Anhängekupplung mit dem Bediengerät entriegelbar ist oder verriegelbar ist oder beides, d.h. dass der Bediener wiederum mit dem drahtlos funktionierenden Bediengerät einen Entriegelungsantrieb oder Verriegelungsantrieb der Anhängekupplung ansteuert.

Die Funktionalität Verriegelung oder Entriegelung oder beides der Anhängekupplung kann auch dann realisiert sein, wenn die Anhängekupplung einen an einem fahrzeugseitigen Halter lösbar befestigbaren Kupplungsarm aufweist. Der Kupplungsarm kann beispielsweise anhand einer Steckverbindung in eine Steckaufnahme eingesteckt oder auf eine Steckaufnahme des Halters aufgesteckt und dort verriegelt werden. Das Steuergerät steuert in diesem Fall eine Verriegelung und/oder Entriegelung der Anhängekupplung an.

Ein vorteilhaftes Konzept sieht vor, dass das Bediengerät ein Gehäuse in der Größe eines Schlüsselanhängers aufweist oder in einen Schlüsselanhänger integriert ist. Beispielweise kann mit dem Schlüsselanhänger nur die Anhängekupplung betätigt werden. Es ist aber auch möglich, dass der Schlüsselanhänger auch weitere Bedienfunktion möglich, so zum Beispiel eine Fahrzeug-Entriegelung oder Verriegelung des Fahrzeugs.

Zweckmäßigerweise ist vorgesehen, dass das Steuergerät einen Eingang zum Empfang mindestens einer Aktivierungsbedingung umfasst, wobei die Steuermittel die mindestens eine Funktion der Anhängekupplung und/oder die Auswertung des mindestens einen Sensorsignals in Abhängigkeit von der Aktivierungsbedingung erfüllen. Die Aktivierungsbedingung kann beispielsweise eine oder mehrere der folgenden Aktivierungsbedingungen umfassen:
- Fahrzeug fährt/Fahrzeug steht = Fahrbetrieb des Kraftfahrzeugs
- Zündung des Kraftfahrzeugs ausgeschaltet
- Motor des Kraftfahrzeugs ausgeschaltet
- Getriebe in Parkstellung
- Fahrersitz nicht belegt
- Fahrzeugschlüssel ist aus dem Zündschloss des Kraftfahrzeugs entfernt
- mindestens eine Fahrzeugtüre und/oder ein Gepäckraumdeckel ist geöffnet
- Anhängekupplung nicht benutzt

Wenn also das Kraftfahrzeug steht und nicht fährt oder die Zündung jedenfalls ausgeschaltet ist, können die Stellmittel eine Verriegelung des Kupplungsarms lösen und/oder den Kupplungsarm verstellen. Auch dann, wenn das Fahrzeug deshalb nicht fahren kann, bei der Fahrzeugschlüssel nicht im Zündschloss steckt und/oder mindestens eine Türe oder der Deckel des Gepäcksabteil geöffnet ist, kann die Anhängekupplung betätigt werden. Der Eingang kann beispielsweise über eine Bus-Schnittstelle (CAN-Bus oder dergleichen) realisiert sein. Aber auch diskrete elektrische Schalteingänge des Steuergeräts können entsprechend beschaltet sein.

Das Steuergerät kann Signale eines Sensors oder mehrerer Sensoren, beispielsweise Belegungssensoren, die eine Belegung des Kupplungsarms durch einen angekuppelten Anhänger oder Lastenträger signalisieren, Stützlast-Sensoren, die eine Belastung des Kupplungsarms signalisieren, Verriegelungssensoren, die eine korrekte Verriegelung der Anhängekupplung für den Fahrbetrieb oder in der Nichtgebrauchsstellung signalisieren oder dergleichen erfassen und dem Bediengerät übermitteln. Es ist auch möglich, dass ein Sensor an Bord der Anhängekupplung ist, beispielsweise ein Drehwinkelsensor, der eine Drehwinkelstellung des Anhängers relativ zum Kraftfahrzeug signalisiert. An dem Bediengerät sind zweckmäßigerweise optische und/oder akustische Anzeigemittel zur Anzeige des mindestens einen Sensorsignals vorgesehen. So kann beispielsweise eine Stützlast an dem Bediengerät angezeigt werden.

Nachfolgend werden Ausführungsbeispiele der Erfindung anhand der Zeichnung erläutert. Es zeigen:
- Figur 1: eine perspektivische Schrägansicht eines erfindungsgemäßen Systems mit einer Anhängekupplung, einem Steuergerät und einem Bediengerät von hinten auf ein Kraftfahrzeug,
- Figur 2: die Anhängekupplung des Systems gemäß Figur 1 in Gebrauchsstellung sowie das Bediengerät bei der Bedienung des Steuergeräts in diesem Zustand der Anhängekupplung,
- Figur 3: das Bediengerät und die Anhängekupplung des Systems gemäß Figur 1 in einer Zwischenstellung zwischen der Gebrauchsstellung gemäß Figur 2 und einer in
- Figur 4: dargestellten Nichtgebrauchsstellung der Anhängekupplung,

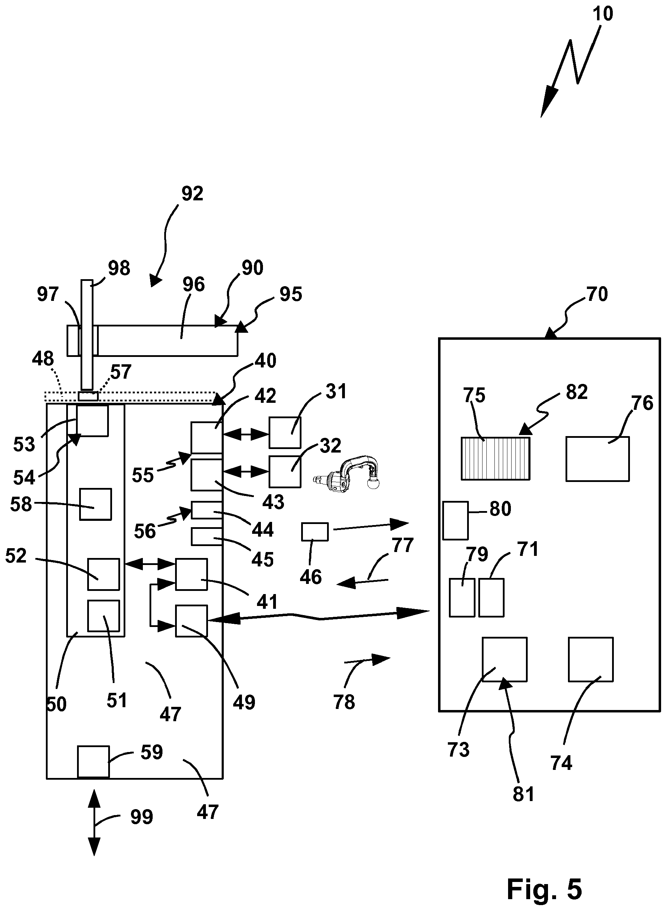

- Figur 5: eine schematische Darstellung des Systems gemäß vorstehender Figuren.

Eine Anhängekupplung 20 eines Systems 10 umfasst einen Kupplungsarm 21, an dessen freiem Endbereich ein Kuppelelement 22, zum Beispiel eine Kupplungskugel oder (nicht dargestellt) eine Steckaufnahme oder ein Steckvorsprung für einen Lastenträger, angeordnet ist. Am einen Endbereich des Kupplungsarms 21 ist das Kuppelelement 22, am anderen Endbereich ein Lagerelement 23 angeordnet. Das Lagerelement 23 ist an einem fahrzeugseitigen Halter 25 schwenkbar und/oder verschieblich gelagert. Beispielsweise ist das Lagerelement 23 an einem Lagerteil 26 des Halters 25 beweglich gelagert. Somit kann der Kupplungsarm 21 zwischen einer Gebrauchsstellung G, in welcher ein Anhänger A an das Kuppelelement 22 ankuppelbar ist, und einer Nichtgebrauchsstellung N verstellt werden, in welcher das Kuppelelement 42 nicht zum Ankuppeln eines Anhängers oder eines Lastenträgers bereitsteht.

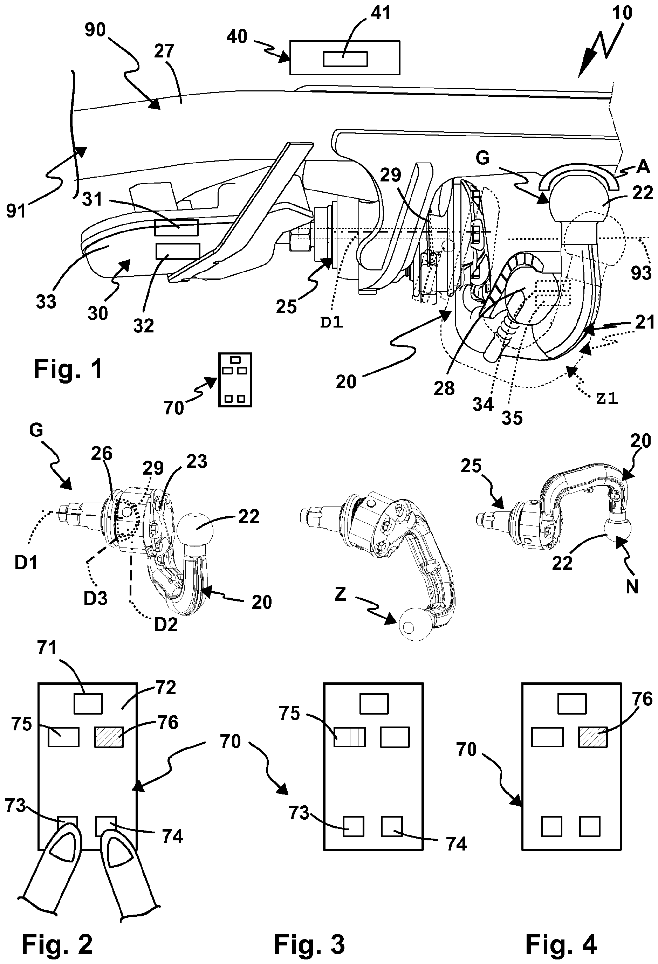

In der Nichtgebrauchstellung N ist der Kupplungsarm 21 beispielsweise im Wesentlichen hinter einer Heckschürze 93 eines Kraftfahrzeugs 90 verborgen, an welchem die Anhängekupplung 20 angeordnet ist. Zwischen der Nichtgebrauchstellung N und der Gebrauchsstellung G nimmt der Kupplungsarm 21 mehrere Zwischenstellungen ein, von denen exemplarisch in Figur 3 eine Zwischenstellung Z eingezeichnet ist. Der Kupplungsarm 21 kann beispielsweise um eine oder mehrere exemplarisch eingezeichnete Achsen D1, D2 oder D3 schwenkbar und/oder verschieblich bezüglich des fahrzeugseitigen Halters 25 gelagert sein.

Beispielsweise ist der Halter 25 an einem Träger 27 befestigt, der sich am Heck 91 quer zur Fahrzeuglängsachse des Kraftfahrzeugs 90 oder in Fahrzeugquerrichtung erstreckt.

Der Kupplungsarm 21 kann bezüglich des fahrzeugseitigen Halters anhand einer Verriegelungseinrichtung 29 ortsfest verriegelt werden, insbesondere in der Gebrauchsstellung G und/der Nichtgebrauchstellung N. Die Verriegelungseinrichtung 29 ist nur schematisch angedeutet. Sie umfasst beispielsweise eines oder mehrere Formschlusselemente, Formschlusskonturen oder dergleichen, die zur Verriegelung des Kupplungsarms 21 ineinandergreifen. Beispielweise ist der Kupplungsarm 21 bezüglich der Achse D1 axial verschieblich, um die Formschlusskonturen außer Eingriff zu bringen und somit den Kupplungsarm 21 zwischen der Gebrauchsstellung G und der Nichtgebrauchsstellung N bewegen zu können. Aber auch eine Verriegelung mit beispielsweise einem Sperrbolzen, Kugeln oder sonstigen Formschlusselementen ist bei der Verriegelungseinrichtung 29 möglich.

Zur Betätigung der Verriegelungseinrichtung 29, insbesondere in Richtung der Entriegelungsstellung, dient ein Verriegelungsantrieb 31 einer Antriebsanordnung 30. Es ist möglich, dass die Verriegelungseinrichtung 29 durch eine Federanordnung in Richtung der Verriegelungsstellung belastet ist, sodass der Verriegelungsantrieb 31 im Prinzip ein Entriegelungsantrieb ist.

Zur Betätigung und Verstellung des Kupplungsarms 21 zwischen der Gebrauchsstellung G und der Nichtgebrauchsstellung N dient ein Stellantrieb 32 der Antriebsanordnung 30.

Die Antriebe 31, 32 umfassen zum Beispiel Elektromotoren oder dergleichen. Die Antriebe 31, 32 sind vorzugsweise in einem Gehäuse 33 der Antriebsanordnung 30 vorgesehen. Es versteht sich, dass auch ein Antriebskonzept mit nur einem einzigen Antrieb 31 oder 32 vorgesehen sein kann, der sowohl die Verriegelung/Entriegelung als auch die Verstellung des Kupplungsarms 21 leistet.

An dem Kupplungsarm 21 befindet sich vorteilhaft eine Anhängersteckdose 28.

Ferner sind Sensoren 34, 35 am Kupplungsarm 21, beispielsweise im Bereich der Anhängersteckdose 28 oder am Körper des Kupplungsarms 21 vorgesehen, die jeweils ein Sensorsignal erzeugen. Der Sensor 34 ist beispielsweise ein Stützlastsensor, der eine Stützlast erfasst, die am Kupplungsarm 21 angreift. Der Sensor 35 ist beispielsweise ein Drehwinkelsensor, der eine Drehwinkelstellung des Anhängers A relativ zum Kraftfahrzeug 90 erfasst.

Die Antriebsanordnung 30 ist anhand eines Steuergeräts 40 ansteuerbar. Das Steuergerät 40 ist vorzugsweise in einem Innenraum 92, beispielsweise im Bereich eines Gepäckraums, des Kraftfahrzeugs 90 angeordnet. Zweckmäßigerweise ist das Steuergerät 40 hinter einer Innenraumverkleidung 95 verborgen, sodass es normalerweise für den Bediener nicht zugänglich ist. Die Innenraumverkleidung 95 schützt das Steuergerät 40 beispielsweise vor Beschädigung durch Gepäck im Innenraum 92, zum Beispiel dem Gepäckraum, des Kraftfahrzeugs 90. Zudem ist das Steuergerät 40 optimal vor Umwelteinflüssen geschützt, nämlich durch die Karosserie des Kraftfahrzeugs 90.

Die Innenraumverkleidung 95 kann fest montiert sein, beispielsweise verschraubt, anhand von Nieten befestigt oder dergleichen. Es ist aber auch möglich, dass die Innenraumverkleidung 95 einen Deckel 96 aufweist, der offenbar oder entfernbar ist, um einen Aufnahmeraum für das Steuergerät 40 zu verschließen.

An der Innenraumverkleidung 95, beispielsweise dem Deckel 96, ist eine Durchtrittsöffnung 97 vorgesehen, durch die hindurch das Steuergerät 40 zugänglich ist, beispielsweise anhand eines Bedienwerkzeugs 98. Das Bedienwerkzeug 98 ist beispielsweise ein Stift, Kugelschreiber oder dergleichen. Jedenfalls ist ein Durchmesser oder Querschnitt der Durchtrittsöffnung 97 nicht dafür geeignet, dass ein Finger eines Menschen sie durchdringt. Dennoch ist das Steuergerät 40 bequem bedienbar, nämlich anhand des nachfolgend erläuterten Bediengeräts 70.

Das Bediengerät 70 ist äußerst kompakt, wobei sein Gehäuse 72 beispielsweise die Größe eines Schlüsselanhängers hat, insbesondere also ca. 2-5 cm lang und etwa 2-3 cm breit ist. Auch eine Höhe des Gehäuses 72 ist sehr kompakt gehalten, zum Beispiel kleiner als 1 cm, vorzugsweise etwa 5 -7 mm. Abweichende Maße des Bediengeräts 70 sind ohne weiteres möglich.

Das Steuergerät 40 und das Bediengerät 70 kommunizieren über eine Steuergerät-Schnittstelle 41 sowie eine Bediengerät-Schnittstelle 72 drahtlos miteinander. Beispielsweise sind die Schnittstellen 41, 71 Funk-Schnittstellen, optische Schnittstellen oder dergleichen. Zu den vorzugsweise vorgesehenen Frequenzbereichen wurde eingangs bereits erläutert.

Das Bediengerät 70 weist beispielsweise Bedienelemente 73, 74, insbesondere Tastschalter, Sensoren oder dergleichen auf, um Steuerbefehle zur Ansteuerung des Steuergeräts 40 zu erzeugen. Andererseits kann das Bediengerät 70 Meldungen des Steuergeräts 40 anzeigen, d.h. Meldedaten 78 ausgeben, nämlich anhand von Anzeigeelementen 75, 76, beispielsweise LEDs.

Über eine Steuerschnittstelle 42 und eine Steuerschnittstelle 43 von Steuermitteln 55 kann das Steuergerät 40 den Verriegelungsantrieb 31 und den Stellantrieb 32 ansteuern. Beispielsweise umfassen die Steuerschnittstellen 42, 43 eine hierfür geeignete Leistungselektronik.

Anhand einer Empfangsschnittstelle 44 kann das Steuergerät Sensorsignale der Sensoren 34 und/oder 35 empfangen. Die Empfangsschnittstelle 44 umfasst beispielsweise entsprechende elektrische Kontakte, eine Drahtlos-Schnittstelle oder dergleichen.

Das Steuergerät 40 und das Bediengerät 70 kommunizieren auf eine sehr sichere Weise miteinander, nämlich anhand einer Verschlüsselung. In einem Speicher 45 des Steuergeräts 40 ist beispielsweise ein Schlüssel 46 zur Verschlüsselung von Daten, beispielsweise Steuerdaten 77, die das Bediengerät 70 an der Steuergerät 40 sendet, oder Meldedaten 78, die das Steuergerät 40 an das Bediengerät 70 sendet, gespeichert. Der Speicher 45 kann von dem Bediengerät 70 anhand von Lesemitteln 80 ausgelesen werden. Das oder die Lesemittel 80 können jedoch den Speicher 45 nur dann auslesen, wenn das Bediengerät 70 unmittelbar in der Nähe des Steuergeräts 40 ist und/oder ein später noch erläutertes Bedienelement 53 betätigt, insbesondere gedrückt, ist oder kurz zuvor betätigt wurde. Dem Speicher 52 ist beispielsweise ein Sender zugeordnet. Es ist aber auch möglich, das Steuergerät 40 den Schlüssel 46 über die drahtlose Steuergerät-Schnittstelle 41 versendet.

Anhand des Schlüssels 46 verschlüsseln Verschlüsselungsmittel 49 des Steuergeräts 40 beispielsweise die Meldedaten 78 vor dem Versand oder im Rahmen des Versands an das Bediengerät 70. Die Meldedaten 78 werden von den Entschlüsselungsmittel 79 wiederum entschlüsselt, so dass sie beispielsweise zur Anzeige von Sensordaten, Funktionen oder dergleichen, an den Anzeigeelementen 75, 76 von optischen Ausgabemitteln 82 des Bediengeräts 70 bereitstehen.

Es versteht sich, dass die Kommunikation zwischen Steuergerät 40 und Bediengerät 70 vorzugsweise bidirektional, insbesondere bidirektional verschlüsselt, ist, sodass die Entschlüsselungsmittel 73 gleichzeitig Verschlüsselungsmittel und die Verschlüsselungsmittel 49 gleichzeitig Entschlüsselungsmittel darstellen oder umfassen.

Auf einer Steuerplatine 50 des Steuergeräts 40 ist beispielsweise ein Prozessor 51, ein Speicher 52 sowie ein Bedienelement 43, zum Beispiel ein Tastschalter oder ein Sensor zur lokalen Bedienung des Steuergeräts 40 angeordnet. Der Prozessor 51 kann Programme, zum Beispiel zur Ansteuerung der Antriebsanordnung 30, zur Realisierung von Sicherheitsfunktionen, gegebenenfalls auch zur Verschlüsselung oder Entschlüsselung von Daten oder dergleichen ausführen. Diese Programme sind im Speicher 52 gespeichert. Selbst verständlich ist auch eine diskrete Bauweise denkbar, d.h. dass anstelle eines Prozessors 51 beispielsweise eine Logikschaltung vorgesehen ist.

Das Bedienelement 53 bildet sozusagen eine lokale Bedienschnittstelle 54 des Steuergeräts 54. Allerdings ist das Bedienelement 53 nur sehr schwer erreichbar, nämlich durch eine Durchtrittsöffnung 57 am Gehäuse 47 des Steuergeräts 40 hindurch. Beispielsweise befindet sich die Durchtrittsöffnung 57 an einem Gehäusedeckel 48 des Gehäuses 47. Es ist auch denkbar, dass die lokale Bedienschnittstelle 54 erst dann erreichbar ist, wenn der Gehäusedeckel 48 geöffnet ist. Die Durchtrittsöffnung 57 des Gehäuses 47 hat einen kleinen Querschnitt, sodass sie nur anhand des Bedienwerkzeugs 98 bedienbar ist.

Nun kann ein Bedienkonzept des Steuergeräts 40 vorsehen, dass der Bediener die Innenraumverkleidung 95 öffnet, beispielsweise den Deckel 46 anhand einer nicht dargestellten Lagerung in eine Offenstellung verlagert oder den Deckel 96 entfernt, um an das Bedienelement 53 zu gelangen. Bevorzugt ist jedoch eine Bedienung anhand des Bedienwerkzeugs 98 vorgesehen, wenn eine Notbedienung notwendig ist. Dann kann der Bediener beispielsweise durch eine Tastfolge oder doch ein einfaches Betätigen des Bedienelements 53 die Anhängekupplung 20 betätigen, beispielsweise die Verriegelungseinrichtung 29 anhand des Verriegelungsantriebs 31 entriegeln und/oder den Kupplungsarm 21 anhand des Stellantriebs 32 zwischen der Gebrauchsstellung G und der Nichtgebrauchstellung N verstellen.

Normalerweise kommt es jedoch gar nicht erst dazu. Der Bediener kann nämlich ganz bequem anhand der Bedienelemente 73, 74 beispielsweise eine Betätigung der Anhängekupplung 20 in Richtung der Nichtgebrauchsstellung N oder der Gebrauchsstellung G bewirken und/oder die Anhängekupplung 20 entriegeln oder verriegeln oder beides. Eine aufwändige Verlegung von Kabeln zwischen dem Bediengerät 70 und dem Steuergerät 40 ist nicht notwendig. Außerdem muss das Bediengerät 40 nicht so zugänglich im Innenraum des Kraftfahrzeugs 90 angeordnet sein, dass seine lokale Bedienschnittstelle 54 bequem zugänglich ist. Da doch sind weitaus mehr Möglichkeiten der Befestigung und Unterbringung des Steuergeräts 40 gegeben als bisher üblich.

Zur Bedienung des Bediengeräts 70 und somit des Steuergeräts 40 ist es aus Sicherheitsgründen vorteilhaft erforderlich, dass der Bediener mit seinen Fingern (schematisch in Figur 2 dargestellt) gleichzeitig beide Bedienelemente 73, 74 betätigt.

Die Anhängekupplung 20 bzw. das Steuergerät 40 signalisieren dabei die korrekte Funktion. Wenn beispielsweise das Anzeigeelement 75 leuchtet (in Zwischenstellung Z der Fall) ist die Anhängekupplung unsicher, d.h. entriegelt und/oder außerhalb der Gebrauchsstellung oder Nichtgebrauchsstellung. Leuchtet jedoch wie in den Figuren 2 und 4 dargestellt in der Gebrauchsstellung G oder der Nichtgebrauchsstellung In das Anzeigeelement 76 ist eine korrekte Verriegelung der Anhängekupplung 20 signalisiert.

Vorteilhaft erweist das Steuergerät 40 eine Empfangsschnittstelle 59, zum Beispiel eine Busschnittstelle, zum Empfang von Statusdaten des Kraftfahrzeugs 90 auf. Die Statusdaten enthalten beispielsweise Informationen darüber, ob mindestens eine Türe oder ein Gepäckraumdeckel des Kraftfahrzeugs 90 geöffnet ist, ob der Zündschlüssel im Zündschloss steckt, ob das Kraftfahrzeug 90 fährt oder nicht oder dergleichen mehr. Diese Bedingungen bilden sogenannte Aktivierungsbedingungen. Wenn nämlich ein nicht sicherer Zustand vorliegt, das Kraftfahrzeug 90 also beispielsweise fährt, blockiert das Steuergerät 40 die Betätigung der Antriebsanordnung 30, auch wenn vom Bediengerät 70 entsprechende Steuerbefehle oder Steuerdaten 77 gesendet werden. Wenn jedoch das Kraftfahrzeug steht und zum Beispiel mindestens eine Türe geöffnet ist, können über das Bediengerät 70 Befehle zur Ansteuerung der Anhängekupplung 20 bzw. des Steuergeräts 40 gegeben werden.

Eine zusätzliche Sicherheitsfunktion stellt es dar, dass akustische Ausgabemitteln 58 des Steuergeräts 40 durch eine Tonfolge, einen Dauerton oder dergleichen signalisieren, dass die Anhängekupplung 20 außerhalb der Gebrauchsstellung G oder der Nichtgebrauchsstellung N steht und/oder nicht verriegelt ist, also unsicher ist.

Eine bevorzugte Ausführungsform der Erfindung sieht vor, dass bei dem Bediengerät 70 oder jedem anderen Bediengerät gemäß der Erfindung eine Rückmeldung erfolgt, wenn eines oder beide der Bedienelemente 73, 74 betätigt werden. Dann zeigen beispielsweise die Anzeigeelemente 75 und/oder 76, jedenfalls optische Ausgabemitteln oder akustische Ausgabemitteln eines jeweiligen Bediengeräts, dass ein Bedienelement des Bediengeräts zur Betätigung der Anhängekupplung betätigt ist.

## Patentansprüche

1. System umfassend ein Steuergerät (40) für eine an einem Kraftfahrzeug (90) angeordnete oder anordenbare Anhängekupplung (20), die ein an einem Kupplungsarm (21) angeordnetes Kuppelelement (22) zum Ankuppeln eines Anhängers aufweist, und ein mobiles, von dem Kraftfahrzeug (90) und dem Steuergerät (40) separates Bediengerät (70), wobei das Steuergerät (40) Steuermittel (55) zur Steuerung mindestens einer Funktion der Anhängekupplung (20) und/oder Auswertemittel (56) zur Auswertung mindestens eines Sensorsignals eines der Anhängekupplung (20) zugeordneten Sensors (34, 35), wobei das Steuergerät (40) eine Bediengerät-Schnittstelle (71) zur drahtlosen Kommunikation mit einer Steuergerät-Schnittstelle (41) des mobilen Bediengeräts (70) aufweist, und wobei das Bediengerät (70) zum Senden mindestens eines Steuersignals zur Ansteuerung der Steuermittel (55) des Steuergeräts (40) und/oder zur Ausgabe mindestens eines Sensorsignals des Sensors (34, 35) ausgestaltet ist, **dadurch gekennzeichnet, dass** die Bediengerät-Schnittstelle (71) und die Steuergerät-Schnittstelle (41) Verschlüsselungsmittel (49) und Entschlüsselungsmittel (79) für eine verschlüsselte Kommunikation miteinander aufweisen, dass das Bediengerät (70) und/oder das Steuergerät (40) mindestens ein Lesemittel (80) zum Einlesen eines Schlüssels (46) für die Verschlüsselungsmittel (49) und Entschlüsselungsmittel (79) für die verschlüsselte Kommunikation aufweist, und dass das mindestens eine Lesemittel (80) eine Drahtlos-Schnittstelle, nämlich eine Funkschnittstelle, zum drahtlosen Einlesen des Schlüssels, insbesondere zum Einlesen des Schlüssels (46) über ein RFID-Tag, und/oder eine optische Schnittstelle zum Einlesen des Schlüssels (46) anhand eines optischen Codes, insbesondere eines Barcodes oder QR-Codes aufweist.

2. System nach Anspruch 1, **dadurch gekennzeichnet, dass** die Verschlüsselungsmittel (49) und Entschlüsselungsmittel (79) eine Kodierung mit 32 Bit und/oder 16 Bit leisten und/oder dass die Verschlüsselungsmittel (49) zu einer Verschlüsselung anhand eines rollierenden Verfahrens oder eines Verfahrens mit sich zufällig und/oder zyklisch veränderndem Code ausgestaltet sind.

3. System nach Anspruch 1 oder 2, **dadurch gekennzeichnet, dass** ein Schlüssel (46) für die Verschlüsselungsmittel (49) des Bediengeräts und/oder des Steuergeräts (40) an dem Steuergerät (40) oder in dem Steuergerät (40) gespeichert ist.

4. System nach einem der vorhergehenden Ansprüche, **dadurch gekennzeichnet, dass** das mindestens eine Lesemittel (80) zum Einlesen des Schlüssels (46) über eine kurze Distanz von maximal 2 Meter, vorzugsweise maximal 1,5 Meter, zweckmäßigerweise maximal 60 bis 30 cm zu dem Speicher, in welchem der Schlüssel (46) gespeichert ist, ausgestaltet sind.

5. System nach einem der vorhergehenden Ansprüche, **dadurch gekennzeichnet, dass** der Speicher mit dem Schlüssel (46) durch eine Abschirmung, insbesondere ein Karosserieblech oder eine Komponente des Steuergeräts (40) gegenüber der Umwelt abgeschirmt ist.

6. System nach einem der vorhergehenden Ansprüche, **dadurch gekennzeichnet, dass** ein Speicher für einen Schlüssel (46) zur Kommunikation zwischen Bediengerät (70) und Steuergerät (40) an Bord des Steuergeräts (40) angeordnet ist, wobei der Speicher von dem Bediengerät (70) ausschließlich drahtgebunden bei direktem Kontakt des Bediengeräts (70) mit dem Steuergerät (40) und/oder bei Betätigung eines Sensors oder Schalters an Bord des Steuergeräts (40) auslesbar ist und/oder das Steuergerät (40) einen Sender zum Senden des Schlüssels (46) an das Bediengerät (70) aufweist, der durch einen Bediener insbesondere manuell betätigbar ist.

7. System nach einem der vorhergehenden Ansprüche, **dadurch gekennzeichnet, dass** das Steuergerät (40) eine Bedienschnittstelle (54) zur lokalen Bedienung aufweist, wobei die Bedienschnittstelle (54) nur anhand eines Bedienwerkzeugs (98), beispielsweise eines Stifts, bedienbar ist und/oder durch eine Abdeckung abgedeckt ist, die zwischen einer Offenstellung, in der die Bedienschnittstelle (54) für einen Bediener zugänglich ist, und einer Schließstellung, in welcher die Abdeckung die Bedienschnittstelle (54) für einen Bediener unzugänglich verschließt, verstellbar ist.

8. System nach Anspruch 7, **dadurch gekennzeichnet, dass** die lokale Bedienschnittstelle (54) des Steuergeräts (40) einen auf einer Steuerplatine (50) angeordneten elektrischen Schalter oder Sensor umfasst oder dadurch gebildet ist und/oder kein durch einen Bediener ohne ein Werkzeug unmittelbar bedienbares Bedienelement hat und/oder dass die lokale Bedienschnittstelle (54) des Steuergeräts (40) keine optischen und/oder akustischen Ausgabemittel (58), insbesondere Anzeigemittel, umfasst und/oder dass die lokale Bedienschnittstelle (54) zum Auslösen eines Sendens eines Schlüssels (46) für eine verschlüsselte Kommunikation zwischen dem Steuergerät (40) und dem Bediengerät (70) ausgestaltet ist und/oder dass ein elektrischer Schalter oder Sensor der lokalen Bedienschnittstelle (54) des Steuergeräts (40) in einem Innenraum eines Gehäuses (47) des Steuergeräts (40) angeordnet ist, wobei das Gehäuse (47) eine Durchtrittsöffnung (57) für das Bedienwerkzeug (98) aufweist, durch welche hindurch der Sensor oder Schalter bedienbar ist und/oder die Abdeckung durch einen Gehäusedeckel (48) eines Gehäuses (47) des Steuergeräts (40) gebildet ist oder einen Gehäusedeckel (48) umfasst, und/oder dass die Abdeckung ein Verkleidungsteil einer Innenraumverkleidung des Kraftfahrzeugs (90) umfasst oder dadurch gebildet ist.

9. System nach einem der vorhergehenden Ansprüche, **dadurch gekennzeichnet, dass** an insbesondere ausschließlich dem Bediengerät (70) optische Ausgabemittel zur Anzeige einer Funktion der Steuermittel (55), insbesondere einer Verriegelung oder Entriegelung des Kupplungsarms (21) und/oder einer Verstellung des Kupplungsarms (21) zwischen einer Nichtgebrauchsstellung (N) und einer Gebrauchsstellung (G), und/oder zur Ausgabe des mindestens eines Sensorsignals vorgesehen sind, wobei die optischen Ausgabemittel des Bediengeräts (70) vorteilhaft ausschließlich LEDs oder zur Ausgabe einfacher optischer Signale in Gestalt von Leuchtsequenzen und/oder Leuchtfarben ausgestaltete Ausgabemittel umfassen.

10. System nach einem der vorhergehenden Ansprüche, **dadurch gekennzeichnet, dass** das Steuergerät (40) oder eine Bedienschnittstelle (81) des Bediengeräts (70) ein Sicherheitsbedienkonzept aufweist, bei dem zur Auslösung einer Funktion der Steuermittel (55) des Steuergeräts (40) mindestens zwei Bedienelemente (73, 74) gleichzeitig oder in einer bestimmten Reihenfolge betätigt werden müssen und/oder mindestens ein Bedienelement (73, 74) in einer bestimmten Bedienfolge bedient werden muss.

11. System nach einem der vorhergehenden Ansprüche, **dadurch gekennzeichnet, dass** die Steuermittel (55) zur Ansteuerung mindestens eines Antriebs, insbesondere zur Verriegelung oder Entriegelung des Kupplungsarms (21) und/oder zur Verstellung des Kupplungsarms (21) zwischen einer Gebrauchsstellung (G) und einer Nichtgebrauchsstellung, ausgestaltet sind und/oder dass es die Anhängekupplung (20) umfasst.

12. System nach einem der vorhergehenden Ansprüche, **dadurch gekennzeichnet, dass** Steuergerät-Schnittstelle (41) und die Bediengerät-Schnittstelle (71) zu einer Funkkommunikation, insbesondere mit mindestens 1 GHz, vorzugsweise mindestens 2 GHz, insbesondere 2,4 GHz, ausgestaltet sind und/oder die Funkkommunikation auf einen Nahbereich von maximal 15 m, insbesondere maximal 10 m, besonders bevorzugt maximal 5 m beschränkt ist.

13. System nach einem der vorhergehenden Ansprüche, **dadurch gekennzeichnet, dass** das Bediengerät (70) ein Gehäuse (72) in der Größe eine Schlüsselanhängers aufweist oder in einen Schlüsselanhänger integriert ist und/oder ein Bestandteil eines Fahrzeugschlüssels bildet.

14. System nach einem der vorhergehenden Ansprüche, **dadurch gekennzeichnet, dass** das Steuergerät (40) akustische Ausgabemittel zur akustischen Ausgabe einer durch das mobile Bediengerät (70) ansteuerbaren Funktion des Steuergeräts (40) aufweist und/oder dass das Steuergerät (40) einen Eingang zum Empfang mindestens einer Aktivierungsbedingung umfasst, wobei die Steuermittel (55) die mindestens eine Funktion der Anhängekupplung (20) und/oder die Auswertung des mindestens einen Sensorsignals in Abhängigkeit von der mindestens einen Aktivierungsbedingung erfüllen.

15. System nach einem der vorgehenden Ansprüche, **dadurch gekennzeichnet, dass** die Steuermittel (55) zur Steuerung einer Verriegelung und/oder Entriegelung der Anhängekupplung und/oder einer Verstellung des Kupplungsarmes (21) zwischen einer zum Ziehen eines Anhängers geeigneten Gebrauchsstellung und einer Nichtgebrauchsstellung, bei der der Kupplungsarm insbesondere näher bei einer Karosserie des Kraftfahrzeuges (90) angeordnet ist, ausgestaltet oder vorgesehen sind und/oder die Auswertemittel zur Auswertung mindestens eines Last-Sensorsignals eines an der Anhängekupplung, insbesondere einem Trägerelement oder dem Kupplungsarm (21) der Anhängekupplung angeordneten Lastsensors oder eines Winkelsignals eines Winkelsensors ausgestaltet sind, wobei der Winkelsensor zur Erfassung eines Relativwinkels zwischen der Anhängekupplung und einem an die Anhängekupplung angekuppelten Anhänger ausgestaltet oder vorgesehen ist.

## Claims

1. System comprising a control unit (4) for a trailer coupling (20) which is or may be fitted to a motor vehicle (90) and has a coupling element (22), mounted on a coupling arm (21), for attaching a trailer, and a mobile operator unit (70), separate from the motor vehicle (90) and the control unit (40), wherein the control unit (40) has control means (55) for controlling at least one function of the trailer coupling (20) and/or evaluation means (56) for evaluating at least one sensor signal of a sensor (34, 35) assigned to the trailer coupling (20), wherein the control unit (40) has an operator unit interface (71) for wireless communication with a control unit interface (41) of the mobile operator unit (70), and wherein the operator unit (70) is designed to send at least one control signal for activating the control means (55) of the control unit (40) and/or to output at least one sensor signal of the sensor (34, 35), **characterised in that** the operator unit interface (71) and the control unit interface (41) have encryption means (49) and decryption means (79) for encrypted communication with one another, that the operator unit (70) and/or the control unit (40) have at least one reading means (80) to read in a code (46) for the encryption means (49) and decryption means (79) for the encrypted communication, and that the one or more reading means (80) has or have a wireless interface, namely a radio interface, for wireless input of the code (46) via an RFID tag, and/or an optical interface for input of the code (46) with the aid of an optical code, in particular a bar code or QR code.

2. System according to claim 1, **characterised in that** the encryption means (49) and decryption means (79) supply a coding with 32 bits and/or 16 buts and/or that the encryption means (49) are designed for encryption with the aid of a rolling process or a process with random and/or cyclically changing code.

3. System according to claim 1 or 2, **characterised in that** a code (46) for the encryption means (49) of the operator unit (70) and/or the control unit (40) is stored on the control unit (40) or in the control unit (40).

4. System according to any of the preceding claims, **characterised in that** the one or more reading means (80) are designed to read in the code (46) over a short distance of maximum 2 metres, preferably maximum 1.5 metres, expediently maximum 60 to 30 cm to the memory in which the code (46) is stored.

5. System according to any of the preceding claims, **characterised in that** the memory with the code (46) is protected from the environment by a shield, in particular a body panel or a component of the control unit (40).

6. System according to any of the preceding claims, **characterised in that** a memory for a code (46) for communication between operator unit (70) and control unit (40) is located onboard the control unit (40), wherein the memory may be read out by the operator unit (70) exclusively wired with direct contact of the operator unit (70) with the control unit (40), and/or with actuation of a sensor or switch onboard the control unit (40), and/or the control unit (40) has a transmitter for sending the code (46) to the operator unit (70), which may be actuated by the operator, in particular manually.

7. System according to any of the preceding claims, **characterised in that** the control unit (40) has a control interface (54) for local operation, wherein the control interface (54) may be operated only with the aid of an operating tool (98), for example a pin, and/or is covered by a cover which may be moved between an open position in which the control interface (54) is accessible to an operator, and a closed position in which the cover closes to make the control interface (54) inaccessible to an operator.

8. System according to claim 7, **characterised in that** the local control interface (54) of the control unit (40) includes or is formed by an electrical switch or sensor mounted on a control board (50), and/or has no control element directly operable by an operator without a tool, and/or that the local control interface (54) of the control unit (40) includes no optical and/or acoustic output means (58), in particular display means, and/or that the local control interface (54) is designed to trigger sending of a code (46) for an encrypted communication between the control unit (40) and the operator unit (70), and/or that an electrical switch or sensor of the local control interface (54) of the control unit (40) is located in an interior of a housing (47) of the control unit (40), wherein the housing (47) has a through opening (57) for the operating tool (98), by means of which the sensor or switch is operable, and/or the cover is formed by a housing cover (48) of a housing (47) of the control unit (40) or includes a housing cover (48), and/or that the cover comprises a trim element of the interior trim of the motor vehicle (90) or is formed thereby.

9. System according to any of the preceding claims, **characterised in that** there are provided, in particular solely on the operator unit (70), optical output means to display a function of the control means (55), in particular a locking or unlocking of the coupling arm (21) and/or an adjustment of the coupling arm (21) between an out-of-use position (N) and a position of use (G), and/or to output the sensor signal or signals, wherein the optical output means of the operator unit (70) are advantageously exclusively LEDs or comprise output means designed to emit simple optical signals in the form of light sequences and/or luminous colours.

10. System according to any of the preceding claims, **characterised in that** the control unit (40) or an operating interface (81) of the operator unit (70) has a safety operating concept which requires that, to activate a function of the control means (55) of the control unit (40), at least two control elements (73, 74) must be actuated simultaneously or in a specific sequence and/or at least one control element (73, 74) must be actuated in a specific operating sequence.

11. System according to any of the preceding claims, **characterised in that** the control means (55) are designed to activate at least one drive, in particular for locking or unlocking the coupling arm (21) and/or adjusting the coupling arm (21) between a position of use (G) and an out-of-use position and/or that the trailer coupling (20) includes it.

12. System according to any of the preceding claims, **characterised in that** the control unit interface (41) and the operator unit interface (71) are designed for radio communication, in particular with at least 1 GHz, preferably at least 2 GHz, in particular 2.4 GHz, and/or radio communication is limited to a close range of maximum 15 m., in particular a maximum of 10 m., with an especially preferred maximum of 5 m.

13. System according to any of the preceding claims, **characterised in that** the operator unit (70) has a housing (72) of the size of a key attachment or is integrated in a key attachment, and/or forms a part of a vehicle key.

14. System according to any of the preceding claims, **characterised in that** the control unit (40) has acoustic output means for the acoustic output of a function of the control unit (40) which may be activated by the mobile operator unit (70) and/or that the control unit (40) includes an input for the receipt of at least one activation condition, wherein the control means (55) carry out the function or functions of the trailer coupling (20) and/or the evaluation of the sensor signal or signals on the basis of the activation condition or conditions.

15. System according to any of the preceding claims, **characterised in that** the control means (55) are designed or provided for the control of the locking and/or unlocking of the trailer coupling and/or adjustment of the coupling arm (21) between a position of use suitable for towing a trailer and an out-of-use position in which the coupling arm is in particular closer to a body of the motor vehicle (90), and/or the evaluation means are designed for the evaluation of at least one load sensor signal of a load sensor mounted on the trailer coupling, in particular on a support element or the coupling arm (21) of the trailer coupling, or an angle signal of an angle sensor, wherein the angle sensor is designed or provided to detect a relative angle between the trailer coupling and a trailer attached to the trailer coupling.

## Revendications

1. Système comprenant un appareil de commande (40) pour un attelage de remorque (20) disposé ou pouvant être disposé sur un véhicule à moteur (90), qui présente un élément de couplage (22) disposé sur un bras d'attelage (21) pour accoupler une remorque, et un appareil d'utilisation (70) mobile séparé du véhicule à moteur (90) et de l'appareil de commande (40), dans lequel l'appareil de commande (40) présente des moyens de commande (55) pour commander au moins une fonction de l'attelage de remorque (20) et/ou des moyens d'évaluation (56) pour évaluer au moins un signal de capteur d'un capteur (34, 35) associé à l'attelage de remorque (20), dans lequel l'appareil de commande (40) présente une interface d'appareil d'utilisation (71) pour la communication sans fil avec une interface d'appareil de commande (41) de l'appareil d'utilisation mobile (70), et dans lequel l'appareil d'utilisation (70) est configuré pour envoyer au moins un signal de commande pour piloter les moyens de commande (55) de l'appareil de commande (40) et/ou pour émettre au moins un signal de capteur du capteur (34, 35), **caractérisé en ce que** l'interface d'appareil d'utilisation (71) et l'interface d'appareil de commande (41) présentent des moyens de cryptage (49) et des moyens de décryptage (79) pour une communication cryptée entre elles, que l'appareil d'utilisation (70) et/ou l'appareil de commande (40) présentent au moins un moyen de lecture (80) pour lire une clé (46) pour les moyens de cryptage (49) et les moyens de décryptage (79) pour la communication cryptée, et que l'au moins un moyen de lecture (80) présente une interface sans fil, à savoir une interface radio, pour lire sans fil la clé, en particulier pour lire la clé (46) par l'intermédiaire d'une étiquette RFID, et/ou une interface optique pour lire la clé (46) à l'aide d'un code optique, en particulier d'un code à barres ou d'un QR code.

2. Système selon la revendication 1, **caractérisé en ce que** les moyens de cryptage (49) et les moyens de décryptage (79) fournissent un codage à 32 bits et/ou 16 bits, et/ou que les moyens de cryptage (49) sont configurés pour un cryptage à l'aide d'un procédé de roulement ou d'un procédé avec un code à changement aléatoire et/ou cyclique.

3. Système selon la revendication 1 ou 2, **caractérisé en ce qu'**une clé (46) pour les moyens de cryptage (49) de l'appareil d'utilisation et/ou de l'appareil de commande (40) est mémorisée sur l'appareil de commande (40) ou dans l'appareil de commande (40).

4. Système selon l'une quelconque des revendications précédentes, **caractérisé en ce que** l'au moins un moyen de lecture (80) est configuré pour lire la clé (46) sur une courte distance de 2 mètres au maximum, de préférence de 1,5 mètre au maximum, de manière opportune de 60 à 30 cm au maximum, par rapport à la mémoire, dans laquelle la clé (46) est mémorisée.

5. Système selon l'une quelconque des revendications précédentes, **caractérisé en ce que** la mémoire avec la clé (46) est protégée par rapport à l'extérieur par un écran de protection, en particulier une tôle de carrosserie ou un composant de l'appareil de commande (40).

6. Système selon l'une quelconque des revendications précédentes, **caractérisé en ce qu'**une mémoire pour une clé (46) est disposée à bord de l'appareil de commande (40) pour la communication entre l'appareil d'utilisation (70) et l'appareil de commande (40), dans lequel la mémoire peut être lue par l'appareil d'utilisation (70) exclusivement de manière filaire en cas de contact direct de l'appareil d'utilisation (70) avec l'appareil de commande (40) et/ou lors de l'actionnement d'un capteur ou d'un commutateur à bord de l'appareil de commande (40) et/ou l'appareil de commande (40) présente un dispositif d'envoi pour envoyer la clé (46) à l'appareil d'utilisation (70), qui peut être actionné en particulier manuellement par un utilisateur.

7. Système selon l'une quelconque des revendications précédentes, **caractérisé en ce que** l'appareil de commande (40) présente une interface d'utilisation (54) pour l'utilisation locale, dans lequel l'interface d'utilisation (54) peut être utilisée seulement à l'aide d'un outil d'utilisation (98), par exemple d'un stylet et/ou est recouvert par un recouvrement, qui peut être ajusté entre une position ouverte, dans laquelle l'interface d'utilisation (54) est accessible à un utilisateur, et une position fermée, dans laquelle le recouvrement ferme l'interface d'utilisation (54) la rendant inaccessible à un utilisateur.

8. Système selon la revendication 7, **caractérisé en ce que** l'interface d'utilisation (54) locale de l'appareil de commande (40) comprend un commutateur ou capteur électrique disposé sur une platine de commande (50) ou est formée par celui-ci et/ou n'a aucun élément d'utilisation pouvant être utilisé directement sans un outil par un utilisateur, et/ou que l'interface d'utilisation (54) locale de l'appareil de commande (40) ne comprend aucun moyen d'émission (58) optique et/ou acoustique, en particulier aucun moyen d'affichage, et/ou que l'interface d'utilisation (54) locale est configurée pour déclencher un envoi d'une clé (46) pour une communication cryptée entre l'appareil de commande (40) et l'appareil d'utilisation (70), et/ou qu'un commutateur ou capteur électrique de l'interface d'utilisation (54) locale de l'appareil de commande (40) est disposé dans un espace intérieur d'un boîtier (47) de l'appareil de commande (40), dans lequel le boîtier (47) présente une ouverture de passage (57) pour l'outil d'utilisation (98), à travers laquelle le capteur ou commutateur peut être utilisé, et/ou le recouvrement est formé par un couvercle de boîtier (48) d'un boîtier (47) de l'appareil de commande (40) ou comprend un couvercle de boîtier (48), et/ou que le recouvrement comprend une partie d'habillage d'un habillage d'espace intérieur du véhicule à moteur (90) ou est formé par celle-ci.

9. Système selon l'une quelconque des revendications précédentes, **caractérisé en ce que** sont prévus sur en particulier exclusivement l'appareil d'utilisation (70) des moyens d'émission optiques pour afficher une fonction des moyens de commande (55), en particulier un verrouillage ou déverrouillage du bras d'attelage (21) et/ou un ajustement du bras d'attelage (21) entre une position de non-utilisation (N) et une position d'utilisation (G) et/ou pour émettre l'au moins un signal de capteur, dans lequel les moyens d'émission optiques de l'appareil d'utilisation (70) comprennent avantageusement exclusivement des DEL ou des moyens d'émission configurés pour émettre des signaux optiques simples sous la forme de séquences lumineuses et/ou de couleurs d'éclairage.

10. Système selon l'une quelconque des revendications précédentes, **caractérisé en ce que** l'appareil de commande (40) ou une interface d'utilisation (81) de l'appareil de commande (70) présente un concept d'utilisation de sécurité, où pour déclencher une fonction des moyens de commande (55) de l'appareil de commande (40), au moins deux éléments d'utilisation (73, 74) doivent être actionnés simultanément ou selon un ordre défini et/ou au moins un élément d'utilisation (73, 74) doit être utilisé dans un ordre défini.

11. Système selon l'une quelconque des revendications précédentes, **caractérisé en ce que** les moyens de commande (55) sont configurés pour piloter au moins un entraînement, en particulier pour verrouiller ou déverrouiller le bras d'attelage (21) et/ou pour ajuster le bras d'attelage (21) entre une position d'utilisation (G) et une position de non-utilisation, et/ou qu'il comprend l'attelage de remorque (20).

12. Système selon l'une quelconque des revendications précédentes, **caractérisé en ce que** l'interface d'appareil de commande (41) et l'interface d'appareil d'utilisation (71) sont configurées pour une communication radio, en particulier à au moins 1 GHz, de préférence au moins 2 GHz, en particulier 2,4 Ghz et/ou la communication radio se limite à une zone proche de 15 m au maximum, en particulier de 10 m au maximum, de manière particulièrement préférée de 5 m au maximum.

13. Système selon l'une quelconque des revendications précédentes, **caractérisé en ce que** l'appareil d'utilisation (70) présente un boîtier (72) de la taille d'un porte-clés ou est intégré dans un porte-clés et/ou fait partie intégrante d'une clé de véhicule.

14. Système selon l'une quelconque des revendications précédentes, **caractérisé en ce que** l'appareil de commande (40) présente des moyens d'émission acoustiques pour émettre de manière acoustique une fonction, pouvant être pilotée par l'appareil d'utilisation mobile (70), de l'appareil de commande (40), et/ou que l'appareil de commande (40) comprend une entrée pour recevoir au moins une condition d'activation, dans lequel les moyens de commande (55) remplissent l'au moins une fonction de l'attelage de remorque (20) et/ou l'évaluation de l'au moins un signal de capteur en fonction de l'au moins une condition d'activation.

15. Système selon l'une quelconque des revendications précédentes, **caractérisé en ce que** les moyens de commande (55) sont configurés ou prévus pour commander un verrouillage et/ou un déverrouillage de l'attelage de remorque et/ou un ajustement du bras d'attelage (21) entre une position d'utilisation adaptée pour tirer une remorque et une position de non-utilisation, où le bras d'attelage est disposé en particulier davantage à proximité d'une carrosserie du véhicule à moteur (90), et/ou les moyens d'évaluation sont configurés pour évaluer au moins un signal de capteur de charge d'un capteur de charge disposé sur l'attelage de remorque, en particulier l'élément de support ou le bras d'attelage (21) de l'attelage de remorque ou un signal d'angle d'un capteur d'angle, dans lequel le capteur d'angle est configuré ou prévu pour détecter un angle relatif entre l'attelage de remorque et une remorque accouplée à l'attelage de remorque.
